# EUROPEAN PATENT APPLICATION

(11) **EP 1 677 208 A1**
(43) Date of publication of application: **05.07.2006**
(21) Application number: 04031015.3
(22) Date of filing: 30.12.2004
(51) Int. Cl.: G06F 17/30

(54) **Method and system for searching for data objects**

(71) Applicant: SAP AG, 69190 Walldorf (DE)
(72) Inventor: Kindsvogel, Uwe, 76678 Ubstadt-Weiher (DE); Janssen, Tatjana, 31542 Bad Nenndorf (DE); Irle, Klaus, 69190 Walldorf (DE); Ludwig, Simeon, 64369 Mühltal (DE)
(74) Representative: Cohausz & Florack

(57) **Abstract**

A method of searching for a data object includes creating an index of data objects and searching for the data object in the index. Creating the index may comprises obtaining data objects from a data source, normalizing the data objects into a standardized format, indexing the data objects, and storing the data objects in a normalized index. Searching for data objects may comprise receiving a search request that includes a search criterion, normalizing the search criterion into a standardized format, and searching within the normalized index for a data object that meets the normalized search criterion.

## Description

### TECHNICAL FIELD

The description relates in general to searching for data objects using a search engine.

### BACKGROUND

In many applications, such as, for example, in enterprise resource planning (ERP), master data management (MDM), customer relation management (CRM), for instance implemented within the products of SAP Aktiengesellschaft "R/3," "mySAP.com," "mySAP," "SAP NetWeaver," data is stored within databases as data objects. The data objects can be, for example, business objects. Customer relation management data can comprise business partner business objects. Business partner business objects can comprise, for example, contact data of contact persons. Contact data may include address, telephone, email or other information that can facilitate communication. Communication with the contact persons can be supported by communication modules within the ERP programs. Additionally, communication with contact persons can be supported by communication programs, of which email clients may be one example. These communication programs can be embedded within the ERP products. Communication programs can also be supported as plug-ins. Communication programs can also be supported as stand-alone solutions. Within the communication programs, the contact data can be stored as well.

Insofar as data objects in general can be structured data--having attributes and attribute values describing a corresponding real world item--a company's contact information can be represented using data objects, for example, business objects.

Business objects can be, for example, business partners, products, plants, machines, or any other real world objects being mapped into the corresponding data structure of the business objects. Various different types of data of a company, for example, information about persons and products, can be stored within the business objects.

For example, information about contact persons can be stored in business partner business objects. The information about the contact persons can be contact data. The contact data can also be stored within communication programs or devices, for example, email clients, email servers, personal digital assistants, and other communication programs or devices. The contact data can also be stored in databases. The databases may be part of the communication programs or devices. The contact data can comprise, for example, a first name, a last name, an address, a phone number, a facsimile number, an email-address, and/or other contact information.

Communication programs may have search capabilities that can return data, for example contact data, in response to a search request or query entered by a user. General search capabilities that might be used within communication programs have been proposed. For example, in PC Magazine, *"Web Searching goes Local," Neil J. Rubenking, 21 October 2004,* various search programs for searching within a local computer or within a local area network are described. These programs provide search engines to search communication items such as contact data. In *PC Magazine, "Supersonic Search Engines," Gary Berline, 12 November 2004,* searching within the local communication information is also disclosed.

The contact data can be stored in business objects, for example, business partner business objects. These business objects can be structured data objects, storing the data in a structured format. To enable fast searches within the business objects, their content can be indexed for a search engine. To enable creating a searchable index, the structured data objects can be mapped into flat documents, which content and attributes can easily be indexed. To enable a search engine to search for data objects faster, data objects that are stored in a structured format may be indexed in an unstructured format. Mapping of data objects, for example business objects, into an unstructured document is described in application number *US 60*/*476,496,* which is incorporated herein by reference. A method of searching for data objects, for example business objects, is described in application number 10/367,661, which is also incorporated herein by reference.

### SUMMARY

Users working with communication programs or devices, for example, may search for certain contact data, but have difficulty finding the contacts, because they do not enter the search request (search query) in a format that exactly matches the format in which the contact data is stored or indexed. For example, a user may search for a person living on "123 Road." The contact data can be stored within the communication program, for example, as "123 Road." If the communication program requires an exact search query, then a query of "123 Road" would return a result, but a query of "123 Rd." would not return a result. Truncated searches or wildcard searching may not be supported.

The known methods allow using truncation, but with the given example, even entering "123 Ro*" would not provide a search result in the present case.

Nevertheless, known methods do not allow searching for contact data using search engines with attributes or pieces of content, without knowing the format the data is stored. Moreover, current methods may not return contact data in response to a query from a user if the user does not know the format in which the

In order to overcome one or more of the above mentioned problems, one general aspect provides a method for searching for data objects, the method comprising creating an index of the data objects, and searching for data objects in the index. Creating the index may comprise obtaining data objects from a data source, normalizing the data objects into a standardized format, and indexing the normalized data objects. Searching for data objects may comprise receiving a search request that comprises search criteria, normalizing the search criteria into the standardized format, and searching within the normalized index for data objects that meet the normalized search criteria.

Another general aspect of the disclosure is a computer program product tangibly embodied in an information carrier, the computer program product comprising instructions that, when executed, cause at least one processor to perform operations comprising creating an index of data objects, and searching for data objects in the index. Creating the index may comprise obtaining data objects from a data source, normalizing the data objects into a standardized format, and indexing the normalized data objects. Searching for data objects may comprise receiving a search request, the search request comprising search criteria; normalizing the search criteria into the standardized format, and searching within the normalized index for data objects that meet the normalized search criteria.

Yet a further general aspect of the disclosure is a computer system arranged for searching for data objects, wherein the system includes an indexing module arranged for creating an index of data objects, and a search module arranged for searching for data objects. The indexing module may comprise a retrieval engine arranged to obtain data objects from a data source, a normalization engine arranged to normalize the data objects into a standardized format, and an indexing engine arranged to index the normalized data objects. The search module may comprise a normalization engine arranged to normalize received search criteria into the standardized format, and a search engine arranged to search within the normalized index for data objects that meet the normalized search criteria.

Advantages of one or more aspects or embodiments may include one or more of the following. Some embodiments may allow users to search for data objects without knowing the exact format in which the data objects are stored. Some embodiments may allow users to retrieve data objects in spite of inconsistencies in format of similar stored data.

The details of one or more embodiments are set forth in the accompanying drawings and description below. Other features and advantages will become apparent from the description, the drawings and the claims.

### BRIEF DESCRIPTION OF THE DRAWINGS

In the FIGs:
- FIG. 1: is an illustration of a computer system that can be used to implement the methods described herein, according to one embodiment;
- FIG. 2: is a further illustration of the computer system shown in FIG. 1, according to one embodiment; and,
- FIG. 3: is an illustration of a computer device within the computer system shown in FIG. 2, according to one embodiment;
- FIG. 4: is flowchart of a method of searching for a data object, according to one embodiment.

- FIG. 5: is a representation of how data may be stored in the computer device shown in FIG. 3, according to one embodiment.

### DETAILED DESCRIPTION

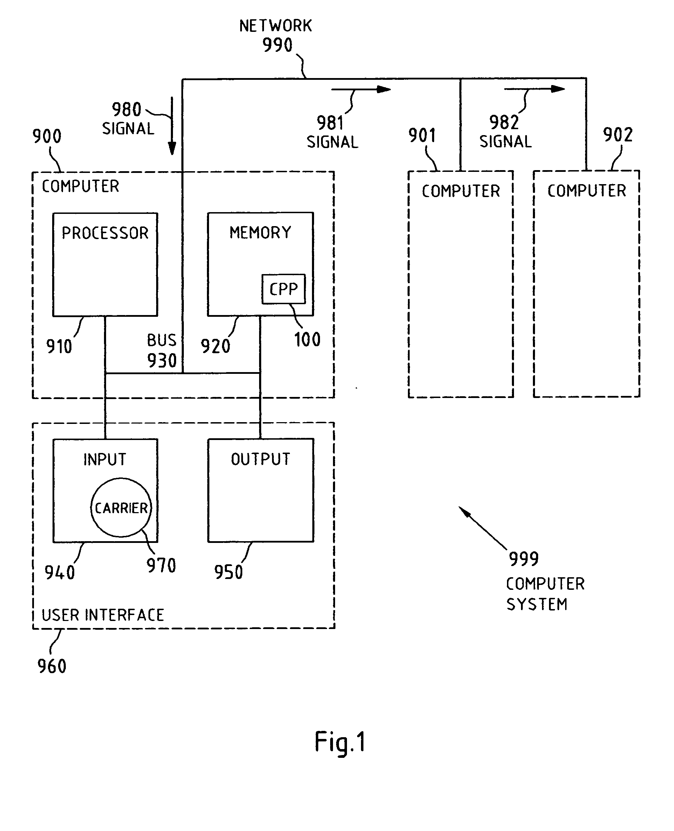

In FIGs 1-3, while reference numbers 100/200, 110/210 can denote similar elements, the function of these elements can be different.

FIG. 1 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980. With respect to computer 900, computer 901/902 is sometimes referred to as a "remote computer." Computer 901/902 is, for example, a server, a peer device, or other common network node, and typically has many or all of the elements described for computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 is comprised of elements that temporarily or permanently store data and instructions. Although memory 920 is illustrated as part of computer 900, memory can also be implemented in network 990, in computers 901/902, and in processor 910 itself (e.g., cache, register), or elsewhere. Memory 920 can be a read-only memory (ROM), a random-access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, or memory stick; or (d) or other memory that allows data to be stored and subsequently retrieved or modified.

Optionally, memory 920 is distributed. Portions of memory 920 can be removable or non-removable. For reading from media and for writing to media, computer 900 uses well-known devices, for example, disk drives, or tape drives.

Memory 920 stores modules such as, for example, a basic input output system (BIOS), an operating system (OS), a program library, a compiler, an interpreter, and a text-processing tool. Modules are commercially available and can be installed on computer 900. For simplicity, these modules are not illustrated.

CPP 100 has program instructions and, optionally, data that cause processor 910 to execute method steps of the present invention. In other words, CPP 100 can control the operation of computer 900 and its interaction in network system 999 so that it operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer-readable medium with computer-readable program code to cause the computer to perform methods of the present invention. Further, signal 980 can also include computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive. Although the examples are devices with human interaction, device 940 can also be a device without human interaction, for example, a wireless receiver (e.g., with satellite dish or terrestrial antenna), a sensor (e.g., a thermometer), or a counter (e.g., a goods counter in a factory). Input device 940 can serve to read carrier 970.

Output device 950 presents instructions and data that have been processed. For example, this can be a monitor or a display, cathode ray tube (CRT), flat panel display, liquid crystal display (LCD), speaker, printer, plotter, or vibration alert device. Output device 950 can communicate with the user, but it can also communicate with other computers.

Input device 940 and output device 950 can be combined into a single device. Any device 940 and 950 can be provided optionally.

Bus 930 and network 990 provide logical and physical connections by conveying instruction and data signals. While connections inside computer 900 are conveniently referred to as "bus 930," connections between computers 900 and 902 are referred to as "network 990." Optionally, network 990 includes gateways, which are computers that specialize in data transmission and protocol conversion.

Devices 940 and 950 are coupled to computer 900 by bus 930 (as illustrated) or by network 990 (optionally). While the signals inside computer 900 are mostly electrical signals, the signals in network 990 are electrical, electromagnetic, optical or wireless (radio) signals.

Networks are commonplace in offices, enterprise-wide computer networks, intranets and the Internet (e.g., the world wide web (WWW)). Network 990 can be a wired or a wireless network. To name a few network implementations, network 990 can be, for example, a local area network (LAN); a wide area network (WAN); a public switched telephone network (PSTN); an Integrated Services Digital Network (ISDN); an infrared (IR) link; a radio link, like Universal Mobile Telecommunications System (UMTS), Global System for Mobile Communication (GSM), or Code Division Multiple Access (CDMA); or a satellite link.

A variety of transmission protocols, data formats and conventions is known; for example, transmission control protocol/internet protocol (TCP/IP), hypertext transfer protocol (HTTP), secure HTTP, wireless application protocol (WAP), unique resource locator (URL), a unique resource identifier (URI), hypertext markup language (HTML), extensible markup language (XML), extensible hypertext markup language (XHTML), wireless markup language (WML), and Standard Generalized Markup Language (SGML).

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card.

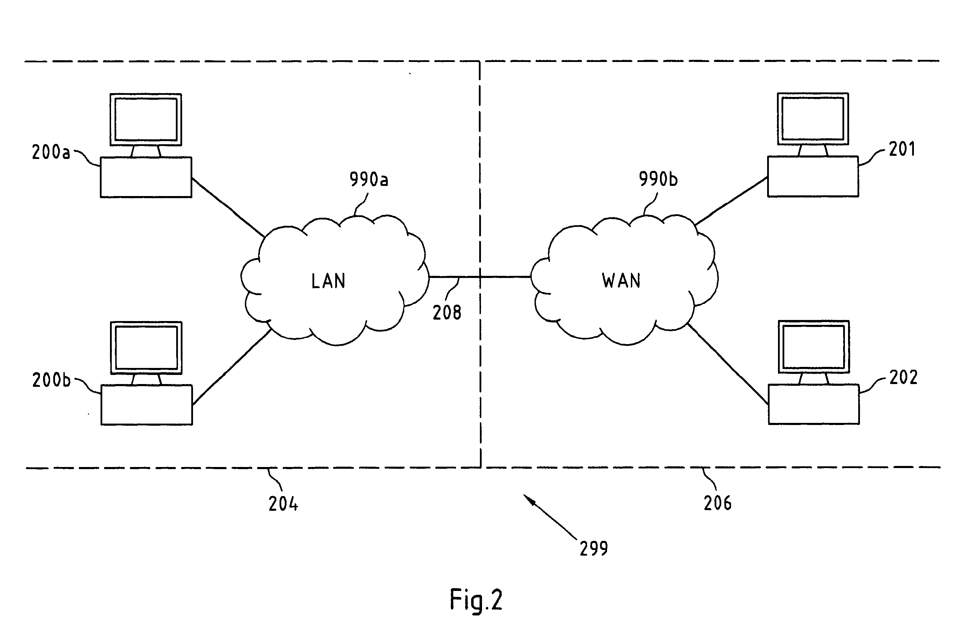

FIG. 2 illustrates one embodiment of a computer system 299 for implementing the methods described herein. The computer system 299 may comprise a local system 204 and an external system 206. The local system 204 can comprise computers 200a, 200b, and a local area network (LAN) 290a.

The external system 206 can comprise a wide area network (WAN) 290b, and computers 201 and 202. Communication between the local system 204 and the external system 206 can be provided using a network connection 208 between the LAN 290a and the WAN 290b. On each local computer 200a, 200b, an email client can be installed. The email client can be part of a communication engine. The email client can use data objects, for example contact data, which can be stored on the local computers in a database. In one embodiment, it may also be possible to access from the local computer 200a via the local area network 990a and the wide area network 990b, an external email client, for example, a web-application, running on one of the external computers 201, 202. Within the external computers 201, 202, contact data of users can be stored as well. When communicating with persons, users can use the email client, and can send messages, electronically or using common mail, using the contact data stored on the computers 200a, 200b, 201, and 202.

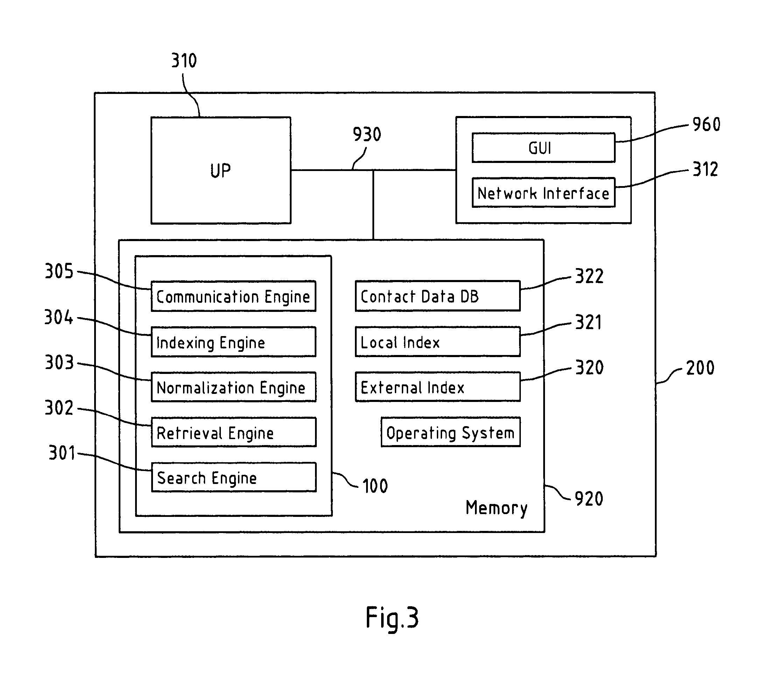

The local computer 200a is illustrated in more detail in FIG. 3. The local computer 200a can comprise a user interface 960 and a network interface 312. The local computer 200a can further comprise a microprocessor 310 for running a computer program product 100. The local computer can further store data within a contact data database 322, within a local index 321 and within an external index 320.

The computer program product 100 may provide several functions, for example the engines 301-305. These engines 301-305 can be part of the computer program product 100 or they can be separate modules, controlled by the computer program product 100. For example, within the local computer 200 can be arranged a search engine 301, a retrieval engine 302, a normalization engine 303, an indexing engine 304 and a communication engine 305.

The search engine 301 can comprise executable instructions for running a search process. The search process may, for example, retrieve data from a local index 321, or from an external index 320. The search engine can comprise executable instructions for running an attribute search within particular attributes of data objects, or running a full text search, searching for search statements within the full text of different attributes.

The search engine can comprise a dictionary, which enables fast access to the data. Embodiments provide using a search engine to execute the search within its indexes (described below). The search engine may provide full text searches within indexes. It may also provide a dictionary to search for particular search statements. Through a dictionary, a search engine may facilitate "fuzzy" searches to identify data objects that do not exactly match search terms. For example, a dictionary may allow full-text searches with only partial search terms.

Moreover, a dictionary may retrieve results that do not exactly match a search term. For example, if a user enters a misspelled search term, for example "raod," a dictionary may nevertheless retrieve results that include "rd," "road," and "raod." The search engine may also provide attribute searches within a database.

The retrieval engine 302 can comprise executable instructions for retrieving data objects from a database 322. The retrieval engine can retrieve data objects stored on a local computer 200b or on an external host computer 201, 202.

Obtaining the data objects may comprise searching within local or external programs and databases for data objects, according to one embodiment.

According to one embodiment, the data objects can comprise attributes and attribute values. According to one embodiment, the search criteria can comprise search attributes and search values. According to one embodiment, it may also be possible for users to search for attributes using a full-text search. The search criteria may comprise any string of characters.

The normalization engine 303 can comprise executable instructions for normalizing the data objects.

Normalizing the data objects may comprise converting the data objects from a format in which they are stored to a commonly agreed-upon format, according to one embodiment. The format can be agreed-upon for each attribute. For example, in one embodiment, address attribute values may be converted into a "long text" format, for example, a format in which "rd." is converted to "road," "blvd." to "boulevard," "ave." to "avenue," etc.

Normalizing the data objects can comprise, according to one embodiment, normalizing the attribute values. Normalizing the attribute values into a standardized format can comprise, according to embodiments, converting the character string of the attribute values of at least one of the contact attributes, e.g., phone number, street data, zip code, state, first name, or last name, into the corresponding standardized format.

Converting the character string can comprise converting language-specific characters into the corresponding plain characters, according to embodiments. Language-specific characters can be, for example, German Umlauts. There can also be, for example, corresponding vocal or consonant combinations in the Latin script that represent the specific characters. These corresponding combinations can be used for normalization.

Normalizing the data objects into the standardized format can comprise converting nicknames into their corresponding long format, according to one embodiment. For example, a look-up table can provide full names corresponding to nicknames. According to a look-up table, the nickname "Bill" ma be converted into "William". The look-up table can provide for different nicknames the corresponding full names for normalization.

The normalization engine may also comprise executable instructions for normalizing a search request before starting the search within the search engine 301.

According to embodiments, normalizing the search criteria can comprise normalizing the search values in the same manner as described above.

The normalization can be performed algorithmically or by using a look-up table. An algorithmic normalization may use normalization rules, for example, for processing telephone numbers. As part of an algorithmic normalization, an algorithm may identify several fields within a telephone number. For example, the algorithm may identify a country code and convert it to three digits which may or may not be preceded or surrounded by other symbols-for instance, parentheses or a '+' symbol. A look-up table normalization may use a look-up table for converting the data. For example, a look-up table may, based on other context-for instance country context-determine how to convert a string. If country context associates an address object with Germany, a look-up table may convert "str." to "strasse." Alternatively, if country context associates the same address object with the U.S., the look-up table may convert "str." to "street."

The indexing engine 304 may comprise executable instructions for creating a local index 321 of locally-stored contact data. The indexing engine 304 may also comprise executable instructions for creating an external index 320 of externally-stored contact data.

Indexing may comprise reading the normalized data objects and creating an index.

Although the foregoing describes normalization as preceding indexing, data objects may also be indexed first, and the index may then be normalized.

The communication engine 305 can comprise executable instructions at least for providing a communication client, for example an email client.

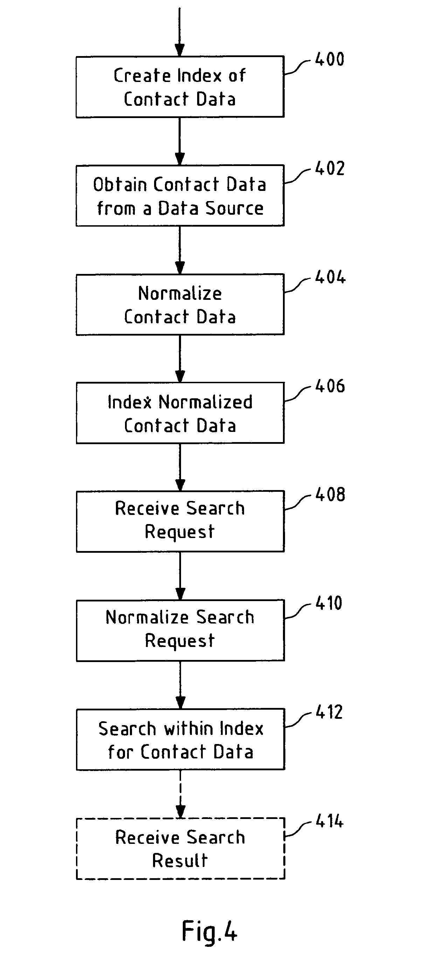

FIG. 4 illustrates a flowchart of an implementation of a method for searching for data objects using a normalized index.

Upon receipt of a search request from a user, within the local computer 200, the microprocessor 310 may execute the computer program product 100 to create an index (400) of data objects. Creating an index may be part of an indexing phase that the microprocessor can run. If an index has already been created of data objects, the microprocessor 310, running the computer program product 100, may skip creating or re-creating the index.

The search request from the user can be, for example, a string of characters or digits. For example, a user can search for contact data, where the respective contact has an address in Germany, with a search request, "Germany." The search request, however, needs to be exact in terms of the format the search string is entered. For example, telephone numbers can be entered in various different formats. These can be, among others, "+49 123 12345678," "0049 123 12345678," "(49) 123 12345678," "(49) 0123 12345678," (0049) 123 12345678," etc. There are multiple possibilities to enter a phone number. Another example can be hyphenated names. For example, the name "Schmitt-Mayer" can also be spelled "Schmitt Mayer," or "SchmittMayer," etc. A user searching for contacts using search requests is commonly not aware of which format the contact data is stored. To improve search functionality and the number of found contact items, the contact data can be normalized when it is indexed. In addition, the search request can be normalized. This normalization of the search request can be done, for example, with the same conversion rules as the normalization of the contact data.

The microprocessor can start the retrieval engine 302 to obtain (402) contact data from a data source. The contact data can comprise contact attributes, for example, street, city, first name, surname, phone number, etc. The contact data can also comprise attribute values, which can be the data of the attributes for the respective contact persons.

The microprocessor 310 can cause the retrieval engine 302 to search on the local computer 200a for contact data. For example, the contact data can be stored on the local computer 200a within the contact data database 322. The contact data stored in the contact data database 322 can be read from the database. The retrieval engine can further use the network interface 312 and the local area network 990a to search on the local computer 200b for further contact data. If the retrieval engine 302 also finds contact data on local computer 200b, this data can also be read.

External contact data can also be retrieved by the retrieval engine 302. Via network interface 312, LAN 290a and WAN 290b, the retrieval engine 302 can access external contact data stored on one of the external computers 201, 202. Also this contact data can be read.

After the local and external contact data have been read by the retrieval engine 302, the contact data is sent to the normalization engine 303. The normalization engine 303 can normalize the attribute values by converting the character string of the attribute values into the standardized format.

The normalization engine 303 can normalize (404) the attribute values into a standardized format by converting the character string, for example, of the attribute values of the contact attributes, e.g., phone number, street data, zip code, state, first name, or last name, into the corresponding standardized format.

The phone numbers can be converted into the format "*[+international code] [regional code] [dialthrough]"*, for example "+49 123 12345678". For example, a phone number stored as "0049 0111 11111" can be converted into "+49 111 11111". This can be an algorithmic normalization.

The street data can be converted from short form into the long text. For example "blvd." can be converted into "boulevard," or "str." can be converted into "street." This conversion can be locally different, because, while in English, "str." should be converted into "street," in German "str." should be converted into "strasse." This can also be a look-up table normalization.

The state data can also be converted from short form into long text, for example, "CA" can be converted into "California," etc. This can also be a look-up table normalization.

Converting names can comprise converting the names in short format into their corresponding long format. For example, "Bill" can be converted into "William." This can be done using a look-up table, which can comprise different conversion rules for different countries.

The same can apply for converting within the normalization engine the language-specific characters into the corresponding plain characters. For example "Ä" can be converted into "AE," or "β" can be converted into "ss."

After normalization of the contact data within the normalization engine 303, the normalized contact data can be indexed (406) by the indexing engine 304. The indexing engine 304 can discriminate local contact data from external contact data. This discrimination can be used to index local contact data within a local index 321 and to index external contact data into an external index 320. However, the indexing engine can also index all normalized contact data into one index. The indexing can comprise storing the contact data together with a reference to the contact data, to enable retrieving the contact data using the index.

After the index creation has been finished, the microprocessor 310 can operate search engine 301 to provide a user interface on GUI 960 with a search mask.

The user can enter a search request into the search mask of GUI 960 and the search request can be received (408) by the search engine 301. The search request can comprise search criteria. The search criteria can comprise search attributes and search values.

The received search request can be sent to the normalization engine 303, where the search request can be normalized (410) into the standardized format. Normalization of the search request can be equal to the normalization of the contact data, as described above. The result of normalizing the contact data and the search request into the same format is to enable users to search for contact data even without knowledge of the format. The contact data is stored within the database 322 or any other data source.

After the normalization (410) of the search request, the search engine 301 can search (412) within the index 322, 321 for contact data that meets the normalized search criteria. The search can be done on both the local index 321 and the external index 320, but it can also be limited to one of these indexes 320, 321.

When a normalized contact data is found that meets the normalized search request, the search result can be received (414) from the search within the index. The search result comprises at least one link to found contact data. The link can enable the user to access the contact data where it is stored. The search result can be presented to the user through the GUI 960.

One embodiment further comprises receiving the search result from the search within the index. The search result can, according to one embodiment, comprise at least one link to found contact data. The found search results can be, according to one embodiment, provided to the user.

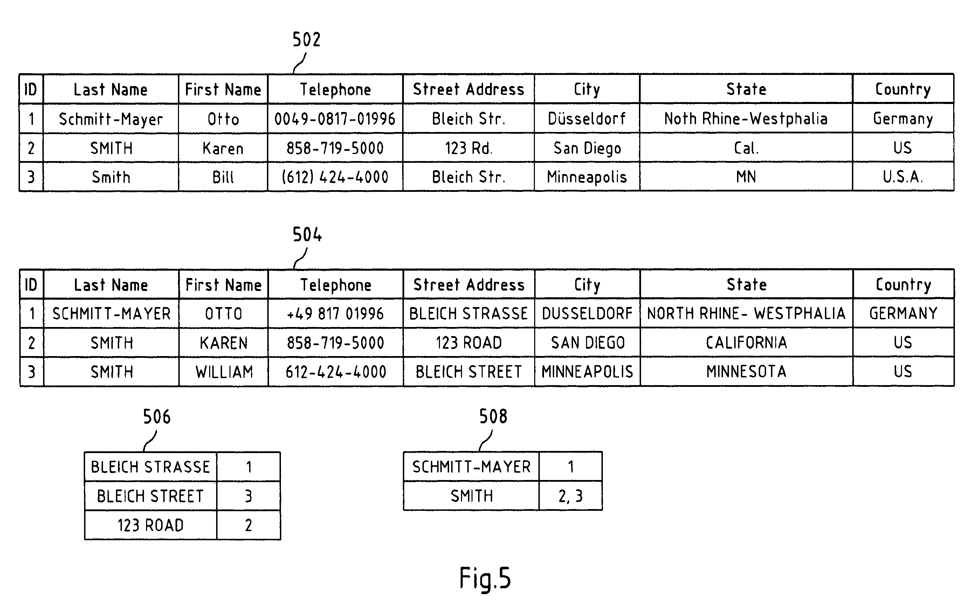

FIG. 5 is a representation of how data objects may be stored in the computer device shown in FIG. 3, according to one embodiment. Data objects may be stored in a database table 502. The data objects may not be in any particular format. For example, names may be stored in nickname format. Telephone numbers may be stored in different formats-some with parentheses, some without. Street addresses, states and countries may be abbreviated in various ways. The data objects may include language-specific characters. Data object characters may be in upper- or lower-case.

All of the variations described above may be eliminated by a normalization process. A second database table 504 illustrates how the data in database table 502 might look after being normalized. Nicknames may be converted to full names, telephone number format may be standardized, abbreviations may be eliminated or standardized, language-specific characters may be removed, character case may be standardized, and other changes may be made to standardize, or normalize, the data.
Some data may be indexed either before or after it is normalized. Indexing may comprise creating an "unstructured" list from a "structured" database table. For example, an index 506 of normalized street addresses is shown. The index may include the values from one or more fields or attributes, along with a reference to a database table from which the values came. In the index 506, for example, "123 ROAD" is associated with "2," since "2" may be an identifier for a database row that includes the data object corresponding to the normalized "123 ROAD." The identifier may be a globally unique identifier (GUID), for example.

Although the index 506 is shown as including normalized data objects from the database table 502, an index may include data objects that have not been normalized.

Indices may be created for other attributes or fields. Index 508 is an example of an index of last names in the database table 502. As shown in the index 508, last names that appear in more than one row in the database table 502 may be associated with more than one identifier, as is shown.

A number of embodiments have been described. Nevertheless, it will be understood that various modifications may be made without departing from the spirit and scope of this disclosure. Accordingly, other implementations are within the scope of the following claims.

## Claims

1. A method for searching for a data object, the method comprising:
- an indexing phase; and
- a search phase;
- wherein the indexing phase comprises:
- retrieving data objects from a data source;
- normalizing retrieved data objects;
- indexing retrieved data objects; and
- storing the indexed, normalized data objects in a normalized index; and
- wherein the search phase comprises:
- receiving a search request comprising a search criterion from a user;
- normalizing the search criterion; and
- searching the normalized index for a data object that meets normalized search criterion.

2. The method of claim 1, wherein the indexing phase and the search phase occur at times substantially separated in time.

3. The method of claim 1 or 2, wherein the indexing phase and the search phase occur in sequence, at substantially similar times.

4. The method of any one of claims 1 to 3, wherein normalizing retrieved data objects precedes indexing retrieved data objects.

5. The method of any one of claims 1 to 4, wherein indexing retrieved data objects precedes normalizing retrieved data objects.

6. The method of any one of claims 1 to 5, wherein the data source comprises at least one of:
a) a local data source; and
b) an external data source.

7. The method of any one of claims 1 to 6, wherein a data object comprises attribute values.

8. The method of claim 7, wherein normalizing a retrieved data object comprises normalizing an attribute value.

9. The method of claim 8, wherein the retrieved data object is a contact data object.

10. The method of claim 9, wherein normalizing the attribute value comprises converting to a standardized format at least one attribute selected from:
a) a telephone number;
b) a street address;
c) a city;
d) a state;
e) a country;
f) a zip code;
g) a first name;
h) a last name;

11. The method of claim 9 or 10, wherein normalizing the attribute value comprises converting a language-specific character to a generic character.

12. The method of claim 11, wherein the language-specific character is a German Umlaut.

13. The method of any one of claims 9 to 12, wherein normalizing the attribute value comprises converting a nickname to a full name.

14. The method of any one of claims 1 to 14, wherein normalizing a retrieved data object comprises at least one of:
a) algorithmic normalization; and
b) look-up table normalization.

15. The method of any one of claims 1 to 15, wherein the search criterion comprises an attribute value for which to search.

16. The method of any one of claims 1 to 16, wherein normalizing the search criterion comprises normalizing the attribute value for which to search.

17. The method of claim 16, wherein normalizing the search criterion comprises at least one of:
a) algorithmic normalization; and
b) look-up table normalization.

18. The method of any one of claims 1 to 17, further comprising providing a result to the user of the search of the normalized index.

19. The method of claim 18, wherein the result comprises at least one link to a data object.

20. A computer program product, tangibly embodied in an information carrier, comprising executable instructions that, when executed, cause a processor to perform operations comprising:
- an indexing phase; and
- a search phase;
- wherein the indexing phase comprises:
- retrieving data objects from a data source;
- normalizing retrieved data objects;
- indexing retrieved data objects; and
- storing the indexed, normalized data objects in a normalized index; and
- wherein the search phase comprises:
- receiving a search request comprising a search criterion from a user;
- normalizing the search criterion; and
- searching the normalized index for a data object that meets normalized search criterion.

21. A computer system comprising:
- at least one local computer device;
- a computer program product tangibly embodied in an information carrier, comprising executable instructions that, when executed, cause a processor to perform operations comprising:
- an indexing phase; and
- a search phase;
- wherein the indexing phase comprises:
- retrieving data objects from a data source;
- normalizing retrieved data objects;
- indexing retrieved data objects; and
- storing the indexed, normalized data objects in a normalized index;
- and wherein the search phase comprises:
- receiving a search request comprising a search criterion from a user;
- normalizing the search criterion; and
- searching the normalized index for a data object that meets normalized search criterion.

22. The computer system of claim 21, further comprising at least one external computer device coupled to the local computer device by a network.

23. The computer system of claim 22, wherein the data source comprises at least one of:
a) the local computer device; and
b) the external computer device.
